# EUROPEAN PATENT APPLICATION

(11) **EP 3 006 775 A1**
(43) Date of publication of application: **13.04.2016**
(21) Application number: 14807507.0
(22) Date of filing: 22.05.2014
(51) Int. Cl.: F16H 1/14, F16H 55/20

(54) **DOUBLE CROSS-CONNECTING GEAR DEVICE**

(30) Priority: 03.06.2013 KR 20130063222
(71) Applicant: Song, Kil Bong, Seoul 153-773 (KR)
(72) Inventor: Song, Kil Bong, Seoul 153-773 (KR)
(74) Representative: Cabinet Chaillot
(86) International application number: PCT/KR2014/004562
(87) International publication number: WO 2014/196751

(57) **Abstract**

Provided is a method for coupling rotary shafts for power transmission using gear connection. In the case of conventional gear connection, a rotary shaft for transmitting power always receives a biased torque, which may cause abrasion of a bearing and a loss of the power. The method is intended to transmit power from one rotary shaft to another rotary shaft without a biased torque. A hollow disc gear has gear teeth on opposite surfaces thereof, and a pair of insert gears of a so-called bevel gear type are connected in symmetry with respect to a center hole of the hollow disc gear. The hollow disc gear, i.e., a double ring gear, secures a space for the insert gears with a rotary frame and has gear teeth corresponding to gear teeth of the insert gears on the opposite surface thereof. The insert gears to be inserted into the hole of the double ring gear are divided into inner and outer connection gears while being engaged with the double ring gear. The method enables the torque of one rotary shaft to be transmitted to the other rotary shaft without undue friction, thereby minimizing mechanical abrasion without a loss of the power.

## Description

### [Technical Field]

The present invention relates to a double cross-connecting gear device and, more particularly, to a double cross-connecting gear device in which two shafts for transmitting power are rotatably connected by gears, thereby making it possible to reduce friction to improve power efficiency when the power is transmitted between the shafts whose revolutions per minute (rpms) are increased, decreased, or fixed.

### [Background Art]

In general, gear connection used for mechanical devices is designed such that a gear coupled to a rotary shaft and another gear coupled to another rotary shaft are engaged and rotated. However, this structure has a problem in that overall power of one rotary shaft is carried on the other rotary shaft or leans to the other rotary shaft, and hence a great loss of friction occurs.

A double reduction gear device is disclosed in USSR Patent No. 03993155 (November 23, 1976), and is intended to be used for trucks with multiple shafts. This technique also has a problem in that power of an engaged gear leans to one side of a driving shaft.

A hybrid gear drive is disclosed in International Patent Application Publication No. WO99/58878 (November 18, 1999), and is characterized by a multiple connecting gear shape in which connecting planes are formed in parallel by removing a gradient in a sort of spiral bevel gear type. However, a phenomenon in which power of each shaft leans to one side is also inevitable.

Currently, general gearing shafts are subjected to lopsided forces corresponding to the powers thereof.

In this way, the gearing of the two shafts is a phenomenon in which the power is transmitted between circumferential outer edges of the gears of the shafts at all times, which is an unchangeable fact since the humankind began to use the gears. For this reason, torsion power is applied to the shaft to which the gear is coupled, leads to a loss of power, and causes damage to bearings and structures supporting the shaft.

### [Disclosure]

### [Technical Problem]

Accordingly, the present invention has been made keeping in mind the above problems occurring in the related art, and an object of the present invention is to provide a double cross-connecting gear device capable of reducing friction to improve power efficiency when power is transmitted between shafts whose revolutions per minute (rpms) are increased, decreased, or fixed.

Further, another object of the present invention is to provide a double cross-connecting gear device capable of redressing the imbalance in gear connection caused in the related art.

### [Technical Solution]

To address the above problems, a double cross-connecting gear device according to the present invention has a structure in which two rotary shafts are interconnected to transmit power, and includes: a double ring gear mounted on one of the rotary shafts; insert gears that are engaged with the double ring gear and are mounted on the other rotary shaft; and a rotary frame into which the double ring gear is rotatably inserted. The double ring gear has a hole formed in the center thereof and ring gear teeth formed on opposite surfaces thereof. One of the insert gears is inserted through the hole of the double ring gear and is engaged with the ring gear teeth inside the rotary frame, and the other insert gear is engaged with the ring gear teeth outside the rotary frame. A ring gear shaft that is one of the rotary shafts is fixed to the center of a circular bottom of the rotary frame. The insert gears are coupled to an insert gear shaft that is the other rotary shaft.

### [Advantageous Effects]

According to the double cross-connecting gear device of the present invention, in the event of power transmission, a biased torque caused by connection of gears does not occur. Since no friction is caused by the biased torque of a shaft, a loss of the power is minimized in the event of power transmission.

Further, according to the present invention, no unnecessary force is applied to a bearing and a structure, and hence no damage is caused to the device. As a result, it is possible to save energy and reduce maintenance costs of a facility.

### [Description of Drawings]

FIG. 1 is a perspective view of a double cross-connecting gear device according to an embodiment of the present invention.
FIG. 2 is an exploded perspective view of a cutaway double ring gear of the double cross-connecting gear device according to the embodiment of the present invention.
FIG. 3 is an exploded perspective view of insert gears of the double cross-connecting gear device according to the embodiment of the present invention.
FIG. 4 is a perspective view of the double ring gear and the insert gears of the double cross-connecting gear device according to the embodiment of the present invention.
FIG. 5 is a view illustrating an assembly configuration of the double cross-connecting gear device according to the embodiment of the present invention.
FIG. 6 is a view illustrating a configuration for parallel connection of the double cross-connecting gear devices according to the embodiment of the present invention.
FIG. 7 is a view illustrating a configuration for orthogonal connection of the double cross-connecting gear devices according to the embodiment of the present invention.

### [Mode for Invention]

In an embodiment of the present invention, a pair of gears are configured to be symmetrically engaged with another gear on opposite surfaces of the other gear at the same time, and a torque applied to a shaft by the engaged gears is made constant without being biased.

Here, the two gears are connected to cross the other gear, i.e. the two gears of an input shaft for transmitting a torque are connected to cross the other gear of an output shaft for receiving the torque in a direction connecting 0 and 180 degrees on a plane based on the output shaft. To this end, the other gear is formed in a disc shape, has gear teeth on the opposite surfaces thereof, and is provided with a hole in the center thereof.

The two gears effectively engaged with the teeth of the other gear are coupled to the input shaft, and the input shaft to which the two gears coupled is inserted into the hole of the other gear. Thereby, a combination of the gears for balanced engagement is obtained.

In addition, since the other gear has the hole formed in the center thereof, the other gear is rotatably coupled with the output shaft by forming a frame surrounding exteriors of the two gears, called insert gears, and fixing the other gear of a disc shape to the frame. Thereby, the gears are connected with no imbalance, and the transmitted torque or power are distributed by the gears without leaning to the output shaft.

Hereinafter, a double cross-connecting gear device according to the present invention will be described in detail with reference to the accompanying drawings.

The double cross-connecting gear device according to the present invention is configured such that two gears are coupled to form contact points at two places while crossing another gear, and power between two shafts is efficiently transmitted without distribution to other places.

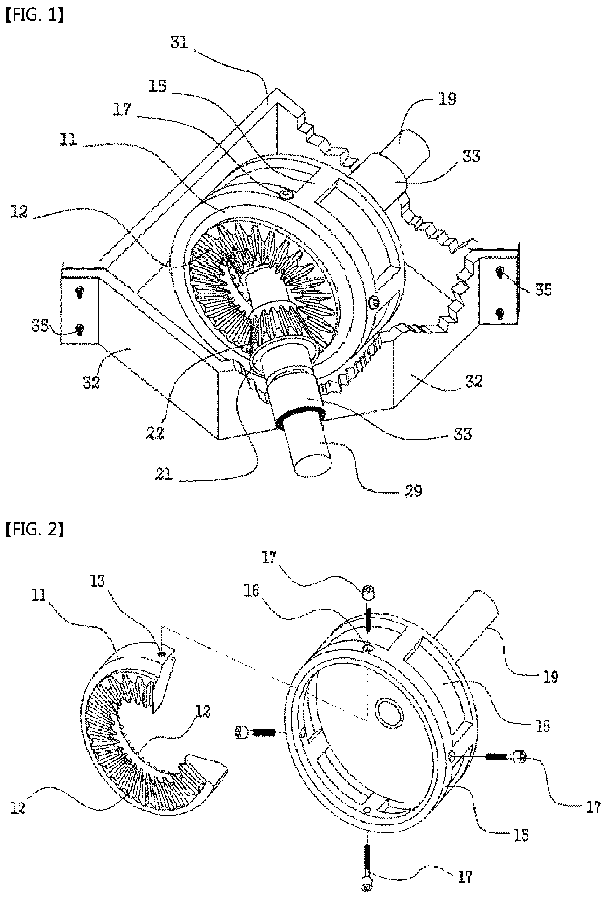

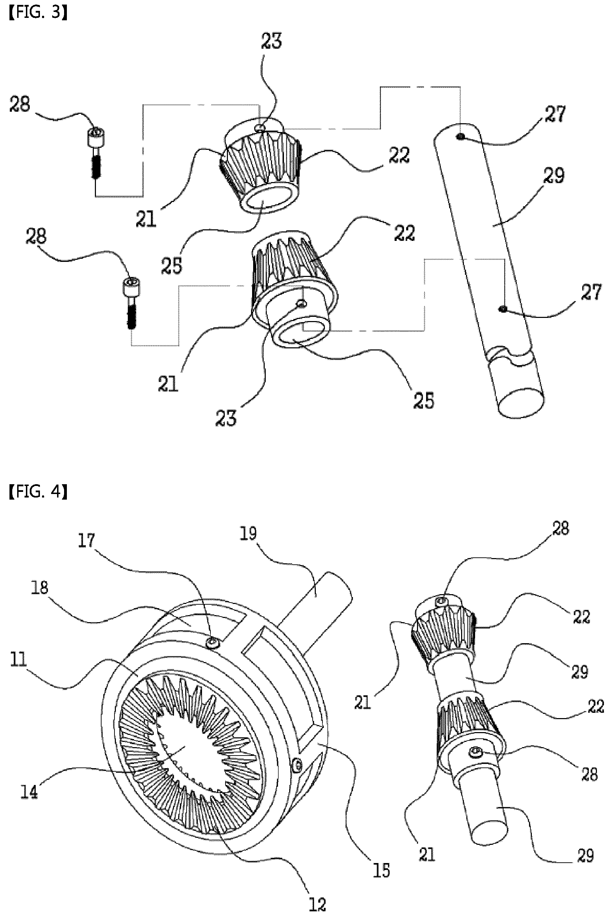

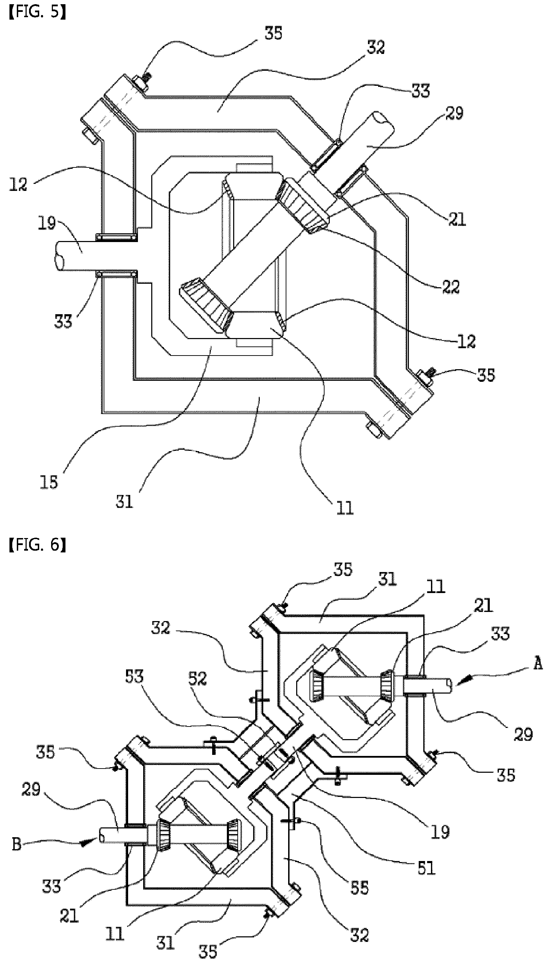

FIG. 1 is a perspective view of a double cross-connecting gear device according to an embodiment of the present invention. FIG. 2 is an exploded perspective view of a cutaway double ring gear of the double cross-connecting gear device according to the embodiment of the present invention. FIG. 3 is an exploded perspective view of insert gears of the double cross-connecting gear device according to the embodiment of the present invention. FIG. 4 is a perspective view of the double ring gear and the insert gears of the double cross-connecting gear device according to the embodiment of the present invention. FIG. 5 is a view illustrating an assembly configuration of the double cross-connecting gear device according to the embodiment of the present invention.

Referring to FIGS. 1 to 5, the double ring gear 11 is a disc gear, in the center of which a hole is formed, and on opposite surfaces of which ring gear teeth 12 are formed. The double ring gear 11 is coupled to a rotary frame 15 fixed to a ring gear shaft 19 using ring gear bolts 17, and is rotatably inserted into and fixed to a rectangular case 31 via a bearing 33.

The double ring gear 11 is configured in such a manner that a thickness thereof is gradually reduced from an outer circumference thereof toward the center thereof and that a pitch between the ring gear teeth 12 is gradually reduced as well.

The number of insert gears 21 having insert gear teeth 22 is two. The insert gears 21 are fixedly coupled to an insert gear shaft 29 by, for instance, bolts in order to properly maintain an interval therebetween. Further, the insert gear shaft 29 is rotatably mounted on a trapezoidal case 32 via a bearing 33.

The ring gear teeth 12 of the double ring gear 11 and the insert gear teeth 22 of the insert gears 21 may be formed in a linear shape or a nonlinear shape such as a helical shape if needed.

The rectangular case 31 is a sort of structure that fixes and protects the ring gear shaft 19 connected to the rotary frame 15 to which the double ring gear 11 is coupled, is bent at a right angle in outward appearance, and has couplers at opposite ends thereof.

The trapezoidal case 32 is a structure in which a surface on which the insert gear shaft 29 is mounted is formed as an oblique surface, and is coupled with the rectangular case 31 by, for instance, coupling bolts 35.

The double ring gear 11 is formed in a disc shape in which the hole is formed in the center thereof and the ring gear teeth 12 are formed on the opposite surfaces thereof, and is provided with a plurality of threaded holes 13 for the purpose of fixture at regular intervals.

The rotary frame 15 fixed to the ring gear shaft 19 is provided with a plurality of frame windows 18 for cooling and internal examination, and is coupled to the threaded holes 13 of the double ring gear 11 through bolt holes 16 by the ring gear bolts 17.

The two insert gears 21 having the insert gear teeth 22 are each formed with a bolt hole 23 and a shaft hole 25.

The insert gear shaft 29 is formed with gear mounting holes 27 at a proper interval, and is configured to be inserted through the shaft holes 25 of the insert gears 21 in place and to be fastened to the gear mounting holes 27 through the bolt holes 23 using insert gear bolts 28.

The double ring gear 11 is formed in the disc shape in which the hole 14 is formed in the center thereof and the ring gear teeth 12 are formed on the opposite surfaces thereof, and is configured to be fixed to the ring gear shaft 19 and be coupled to the rotary frame 15 having the plurality of frame windows 18 by the ring gear bolts 17.

The two insert gears 21 having the insert gear teeth 22 are configured to be fitted around the insert gear shaft 29 to properly maintain the interval therebetween and be fastened by the insert gear bolts 28.

The double ring gear 11 is formed in the disc shape in which the hole is formed in the center thereof and the ring gear teeth 12 are formed on the opposite surfaces thereof, is coupled to the rotary frame 15 fixed to the ring gear shaft 19 by the ring gear bolts, is inserted into the rectangular case 31 via the bearing 33 into which the ring gear shaft 19 is inserted, and is rotatably fixed to the rectangular case 31.

FIG. 6 is a view illustrating a configuration for parallel connection of the double cross-connecting gear devices according to the embodiment of the present invention.

Referring to FIG. 6, the double cross-connecting gear devices are connected opposite to each other without increasing/decreasing a gear ratio, thereby forming parallel rotary shafts.

The double ring gear 11 is formed in the disc shape in which the hole is formed in the center thereof and the ring gear teeth are formed on the opposite surfaces thereof, is coupled to the rotary frame fixed to the ring gear shaft 19 by the ring gear bolts, and is inserted into and rotatably fixed to the trapezoidal case 32 via the bearing 33.

The two insert gears 21 having the insert gear teeth are configured to be fixedly coupled to the insert gear shaft 29 by, for instance, bolts in order to properly maintain the interval therebetween, and to mount the insert gear shaft 29 on the rectangular case 31 via the bearing 33 such that the insert gear shaft 29 is rotated.

The trapezoidal case 32 is a sort of structure that fixes and protects the ring gear shaft 19 connected to the rotary frame to which the double ring gear 11 is coupled, and is configured to have an outer shape in which the surface into which the ring gear shaft 19 is inserted is inclined at a predetermined angle and can be coupled to the opposite ends thereof.

The rectangular case 31 has an outer shape that is bent at a right angle, and is configured to install the insert gear shaft 29 and to be fastened with the trapezoidal case 32 at a position at which the rectangular case 31 faces the trapezoidal case 32 using coupling bolts 35.

When the prepared double cross-connecting gear devices A and B are connected opposite to each other, the two double cross-connecting gear devices A and B are connected by causing the ring gear shafts 19 to face each other, inserting the ring gear shafts 19 into a connecting sleeve 52, fastening the connecting sleeve 52 using connecting bolts 53, disposing a connecting case 51 between the opposite trapezoidal cases 32, and fastening the opposite trapezoidal cases 32 using case bolts 55.

As illustrated in FIG. 6, when a driving force (or power) is applied to the double cross-connecting gear device A, the insert gears 21 transmit the driving force to the double ring gear 11, and the double ring gear 11 is decelerated. The power is equally transmitted to the double ring gear 11 of the double cross-connecting gear device B by the connecting sleeve 52. The power is transmitted to the insert gears 21 engaged with the double ring gear 11 of the double cross-connecting gear device B, and the insert gears 21 are accelerated. Consequently, a speed input to the double cross-connecting gear device A is identical to a speed output from the double cross-connecting gear device B.

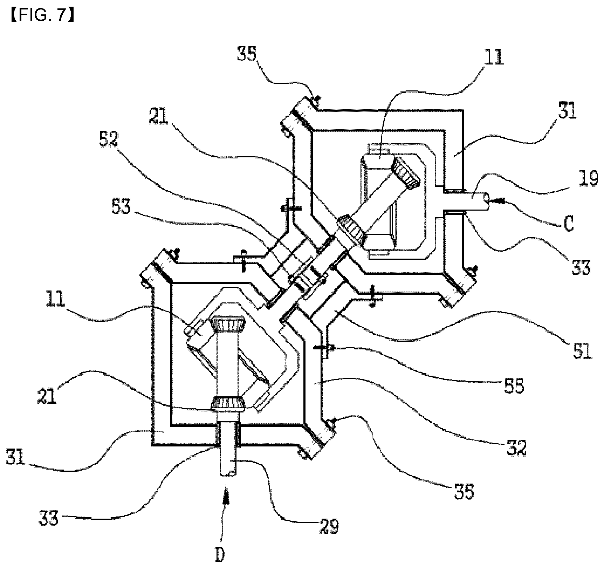

FIG. 7 is a view illustrating a configuration for orthogonal connection of the double cross-connecting gear devices according to the embodiment of the present invention.

Referring to FIG. 7, the double cross-connecting gear devices are connected opposite to each other, thereby forming rotary shafts connected at a gear ratio for acceleration or deceleration.

In one of the double cross-connecting gear devices, the double ring gear 11 is formed in the disc shape in which the hole is formed in the center thereof and the ring gear teeth are formed on the opposite surfaces thereof, is coupled to the rotary frame fixed to the ring gear shaft 19 by the ring gear bolts, and is inserted into and rotatably fixed to the trapezoidal case 32 via the bearing 33.

The two insert gears 21 having the insert gear teeth are configured to be fixedly coupled to the insert gear shaft 29 by, for instance, bolts in order to properly maintain the interval therebetween. The bearing 33 is fitted around the insert gear shaft 29 and is fixedly fitted into the rectangular case 31 such that the insert gear shaft 29 is rotated.

The trapezoidal case 32 is a sort of structure that fixes and protects the ring gear shaft 19 connected to the rotary frame to which the double ring gear 11 is coupled, and is configured to have an outer shape in which the surface into which the ring gear shaft 19 is inserted is inclined at a predetermined angle and can be coupled to the opposite ends thereof.

The rectangular case 31 has an outer shape that is bent at a right angle, and is configured to install the insert gear shaft 29 and to be fastened with the trapezoidal case 32 at a position at which the rectangular case 31 faces the trapezoidal case 32 using coupling bolts 35.

In the other double cross-connecting gear device, the double ring gear 11 is formed in the disc shape in which the hole is formed in the center thereof and the ring gear teeth are formed on the opposite surfaces thereof, is coupled to the rotary frame fixed to the ring gear shaft 19 by the ring gear bolts, and is inserted into and rotatably fixed to the rectangular case 31 via the bearing 33.

The two insert gears 21 having the insert gear teeth are configured to be fixedly coupled to the insert gear shaft 29 by, for instance, bolts in order to properly maintain the interval therebetween. The bearing 33 is fitted around the insert gear shaft 29 and is fixedly fitted into the trapezoidal case 32 such that the insert gear shaft 29 is rotated.

The rectangular case 31 is a sort of structure that fixes and protects the ring gear shaft 19 connected to the rotary frame to which the double ring gear 11 is coupled, and is configured to have an outer shape that is bent at a right angle and to be able to be coupled to the opposite ends thereof.

The trapezoidal case 32 is configured such that the surface on which the insert gear shaft 29 is installed is inclined at a predetermined angle and is fastened with the rectangular case 31 at a position at which the trapezoidal case 32 faces the rectangular case 31 using coupling bolts 35.

The two double cross-connecting gear devices are combined by causing the insert gear shaft 29 and the ring gear shaft 19, both of which protrude from the respective trapezoidal cases 32, to face each other, inserting the insert gear shaft 29 and the ring gear shaft 19 into the connecting sleeve 52, fastening the connecting sleeve 52 using the connecting bolts 53, disposing the connecting case 51 between the trapezoidal cases 32, and fastening the opposite trapezoidal cases 32 using the case bolts 55. Thereby, the shaft connection by which the speed is gradually increased or decreased is formed at a right angle.

Operations of the double cross-connecting gear devices configured as in FIG. 7 will be described below.

When a driving force (or power) is applied to the double cross-connecting gear device C, the double ring gear 11 transmits the driving force to the insert gears 21, and the insert gears 21 are accelerated. The driving force is transmitted to the double ring gear 11 of the double cross-connecting gear device D by the connecting sleeve 52. The power is transmitted to the insert gears 21 engaged with the double ring gear 11 of the double cross-connecting gear device D, and the insert gears 21 are accelerated once more. Consequently, a speed input to the double cross-connecting gear device C is identical to a speed output from the double cross-connecting gear device D.

In contrast, when a driving force (or power) is applied to the double cross-connecting gear device D, a speed output from the double cross-connecting gear device C is reduced.

## Claims

1. A double cross-connecting gear device in which two rotary shafts are interconnected to transmit power, the double cross-connecting gear device comprising:
a double ring gear (11) mounted on one of the rotary shafts;
insert gears (21) that are engaged with the double ring gear (11) and are mounted on the other rotary shaft; and
a rotary frame (15) into which the double ring gear (11) is rotatably inserted,
wherein the double ring gear (11) has a hole (14) formed in the center thereof and ring gear teeth (12) formed on opposite surfaces thereof,
one of the insert gears (21) is inserted through the hole (14) of the double ring gear (11) and is engaged with the ring gear teeth (12) inside the rotary frame (15), and the other insert gear (21) is engaged with the ring gear teeth (12) outside the rotary frame (15),
a ring gear shaft (19) that is one of the rotary shafts is fixed to the center of a circular bottom of the rotary frame (15), and
the insert gears (21) are coupled to an insert gear shaft (29) that is the other rotary shaft.

2. The double cross-connecting gear device according to claim 1, wherein the double ring gear (11) has a shape in which a thickness thereof is gradually reduced from an outer circumference thereof toward the center thereof, and the ring gear teeth (12) of the double ring gear (11) and insert gear teeth (22) of the insert gears (21) are engaged in a nonlinear shape like spiral gears.

3. The double cross-connecting gear device according to claim 1, wherein the ring gear shaft (19) is inserted into a rectangular case (31) such that the rotary frame (15) and the double ring gear (11) are rotatably fixed, the insert gear shaft (29) on which the insert gears (21) are mounted is rotatably fixed to the trapezoidal case (32), and the rectangular case (31) and the trapezoidal case (32) are coupled opposite to each other with the insert gears (21) inserted into the hole (14) of the double ring gear (11).

4. The double cross-connecting gear device according to claim 1, wherein the rotary frame (15) is coupled with the double ring gear (11) and is fixed to the ring gear shaft (19), the ring gear shaft (19) is inserted into and rotatably fixed to a trapezoidal case (32), the insert gear shaft (29) on which the insert gears (21) are mounted is rotatably fixed to a rectangular case (31), and the rectangular case (31) and the trapezoidal case (32) are coupled opposite to each other with the insert gears (21) inserted into the hole (14) of the double ring gear (11).

5. The double cross-connecting gear device according to claim 1, wherein the rotary frame (15) includes a plurality of frame windows (18).

6. The double cross-connecting gear device according to claim 3 or 4, wherein the double cross-connecting gear device on which the rectangular case (31) and the trapezoidal case (32) are mounted is coupled to another double cross-connecting gear device on which the rectangular case (31) and the trapezoidal case (32) are mounted by inserting the shafts rotatably fixed to the opposite trapezoidal cases (32) into a connecting sleeve (52), fastening the connecting sleeve (52) using connecting bolts (53), disposing a connecting case (51) between the opposite trapezoidal cases (32), and fastening the connecting case (51) using case bolts (55).
